# EUROPÄISCHE PATENTSCHRIFT

(11) **EP 0 690 828 B1**
(45) Veröffentlichungstag und Bekanntmachung des Hinweises auf die Patenterteilung: **30.10.1996**
(21) Anmeldenummer: 94904975.3
(22) Anmeldetag: 25.01.1994
(51) Int. Cl.: C04B 7/52, B02C 17/06

(54) **VERFAHREN UND VORRICHTUNG ZUR HERSTELLUNG EINES BINDEMITTELS**
METHOD AND DEVICE FOR PRODUCING A BINDER
PROCEDE ET DISPOSITIF DE FABRICATION D'UN LIANT

(30) Priorität: 27.03.1993 DE 4310039
(43) Veröffentlichungstag der Anmeldung: 10.01.1996
(73) Patentinhaber: RÜDERSDORFER ZEMENT GMBH, D-15558 Rüdersdorf (DE)
(72) Erfinder: ROSTOCK, Martin, D-15890 Eisenhüttenstadt (DE); BEIN, Günter, D-15890 Eisenhüttenstadt (DE); MÜLLER, Gerhard, D-15890 Eisenhüttenstadt (DE)
(74) Vertreter: Becker, Thomas, Dr., Dipl.-Ing.
(86) Internationale Anmeldenummer: DE9400074
(87) Internationale Veröffentlichungsnummer: WO9422781

(56) Entgegenhaltungen:
- DE-A- 3 314 103
- DE-C- 454 978
- FR-A- 562 069
- GB-A- 244 603
- ZEMENT, KALK, GIPS Bd. 45, Nr. 7 , 1992 , WIESBADEN DE Seiten 342 - 347 N. PATZELT 'Moderne Systeme für die Hüttensandmahlung'

## Beschreibung

Die Erfindung betrifft ein Verfahren und eine Vorrichtung zur Herstellung eines Bindemittels aus wenigstens zwei Komponenten unterschiedlicher Mahlbarkeit.

Wenngleich die Erfindung Bindemittel jeder Art betrifft, so richten sich das Verfahren und die Vorrichtung in erster Linie auf anorganische Bindemittel mit einem Anteil an Hüttensand (glasig erstarrte Hochofenschlacke).

Der Begriff "Mahlbarkeit" hängt von den physikalischen Eigenschaften und der chemischen Zusammensetzung des Mahlgutes ab und kann selbst bei Stoffen gleicher Zusammensetzung unterschiedlich sein. Die Mahlbarkeit wird vor allem durch die Zähigkeit des zu zerkleinernden Gutes beeinflußt und ist unabhängig vom Mahlverfahren um so besser, je weniger Widerstand das zu zerkleinernde Gut der Mahleinrichtung entgegensetzt und je größer die bei der Mahlung erhaltene spezifische Oberfläche, bezogen auf die geleistete Arbeit, ist. Die Mahlbarkeit steht somit im umgekehrten Verhältnis zur spezifischen Oberflächenarbeit, die auch als Mahlwiderstand bezeichnet wird.

Sowohl der Stand der Technik wie auch die Erfindung werden nachstehend anhand der Herstellung und Verarbeitung von Hüttenzement näher erläutert. Die Erfindung ist insoweit jedoch - wie dargestellt - nicht beschränkt.

Hüttenzement besteht mindestens aus den folgenden beiden Komponenten: Zementklinker (A) und Hüttensand (C). Ein üblicher Sulfatträger (Gips, Anhydrit etc.) wird dabei häufig der Komponente A zugerechnet.

Im Stand der Technik sind im wesentlichen zwei Aufbereitungsverfahren bekannt:
1. Die gemeinsame Vermahlung und Mischung der Komponenten in einem gemeinsamen Mahl-/Mischaggregat
2. getrennte Vermahlung der Komponenten und anschließende gemeinsame Vermischung in einem Mischaggregat.

Bei dem erstgenannten Verfahren kommt es während der Vermahlung zur innigen Mischung und gegenseitigen Kontaktierung der Mischungskomponenten. Da der Hüttensand einen sehr viel höheren Mahlwiderstand aufweist als der Zementklinker und insbesondere der Sulfatträger, kommt es bei der gemeinsamen Vermahlung/Vermischung zu unterschiedlichen Mahlfeinheiten der Mischungskomponenten. So wird der Zementklinker (meist: Portlandzement-Klinker) ebenso wie der Sulfatträger (insbesondere: Gips) in aller Regel sehr viel feiner aufgemahlen als notwendig und/oder der Hüttensand verbleibt bei diesem Verfahren relativ grobkörnig im Endprodukt, da er nicht genügend Mahlenergie erhält.

Hüttensand selbst ist eine latent hydraulische Komponente, die zur Reaktion einen Anreger benötigt, hier: den Portlandzementklinker. Die hydraulische Aktivität des Hüttensandes ist dabei um so größer, je höher seine Oberfläche ist. Insoweit ist ersichtlich, daß die gemeinsame Vermahlung und Mischung der Bindemittel-Komponenten zwar relativ einfach in einem Misch-/Mahlaggregat ausgeführt werden kann, aber auch wichtige Nachteile hat. Es muß sehr lange gemahlen werden, um den Hüttensand in der gewünschten Feinteiligkeit zu erhalten. Dies erfordert einen hohen Energieeinsatz. Gleichzeitig werden dabei die übrigen Mischungskomponenten über das notwendige Maß hinaus weiter gemahlen. Dabei kann deren Feinteiligkeit so extrem steigen, daß die Teilchen zum Schluß wieder agglomerieren, was ebenfalls unerwünscht ist.

Die vorgenannten Probleme treten bei dem zweiten Verfahren, bei dem die Komponenten getrennt gemahlen werden, nicht auf. Jede Komponente kann in einem auf das Mahlgut abgestimmten Mahlaggregat auf die gewünschte spezifische Oberfläche aufgemahlen werden. Der Nachteil dieses Verfahrens besteht darin, daß mehrere Mahlaggregate benötigt werden und vor allem die Komponenten anschließend in einer weiteren Anlage gemischt werden müssen. Die anschließende Vermischung hat nicht die Qualität der in-situ-Vermischung bei der Mahlung. Die reine Vermischung getrennt vorgemahlener Komponenten führt zu Bindemitteln mit unterschiedlichen Eigenschaften, insbesondere unterschiedlichem Hydratationsverhalten. Auch der Wasserbedarf ist in der Regel unterschiedlich.

Aus der DE 33 14 103 C2 ist ein Verfahren zur gemeinsamen Mahlung zweier oder mehrerer, unterschiedlich mahlbarer spröder Stoffe bekannt. Dabei wird der schwer mahlbare Stoff, beispielsweise Hüttensand, zunächst in einer Gutbett-Walzenpresse zu sogenannten Schülpen verpreßt, um den Mahlwiderstand für die anschließende gemeinsame Vermahlung mit dem leichter mahlbaren Stoff, nämlich dem Zementklinker/ Gips-Gemisch, herabzusetzen. Durch die Vorbehandlung des Hüttensandes wird zwar der Mahlwiderstand herabgesetzt. Die gemeinsame Mahlung mit den übrigen Komponenten ermöglicht jedoch keinen differenzierten Kornaufbau.

Durch die gemeinsame Vermahlung von Hüttensand und Zementklinker werden die eingangs beschriebenen Probleme deshalb nur teilweise beseitigt. Die gemeinsame Vermahlung erlaubt auch keine individuelle Einstellung des Kornbandes, insbesondere hinsichtlich der Komponente Hüttensand.

Aus "Zement-Kalk-Gips, 7/1991, 345" ist die getrennte Aufmahlung von Hüttensand einerseits sowie Zementklinker und Gips andererseits bekannt. Die vorgemahlenen Komponenten werden anschließend in einem separaten Aggregat miteinander vermischt. Wie eingangs geschildert, erfordert dieses bekannte Verfahren einen hohen apparativen Aufwand.

Die EP 0 010 027 B1 beschreibt ein Verfahren zur Herstellung von hydraulischen Zementen auf der Basis von Portlandzement-klinker und Rückstandscalciumsulfat. Dabei wird das Calciumsulfat zeitlich versetzt zum Mahlvorgang des Klinkers zugesetzt, wodurch die gemeinsame Mahlung zeitlich begrenzt wird. Ursächlich dafür ist, daß Rückstandscalciumsulfat außerordentlich feinteilig vorliegt und entsprechend keinerlei Nachmahlung bedarf, sondern ausschließlich untergemischt werden muß. Würde man das Rückstandscalciumsulfat dem gesamten Mahlprozeß mit dem Klinker unterwerfen, so würde dies zwangsläufig zu einer Übermahlung des feinteiligen Calciumsulfats führen.

Ausgehend von diesem Stand der Technik liegt der Erfindung die Aufgabe zugrunde, ein Verfahren und eine Vorrichtung zur Herstellung eines Bindemittels der vorgenannten Art anzugeben, mit denen sich das Bindemittel leicht und energiesparend sowie mit den gewünschten Werkstoffeigenschaften gezielt herstellen läßt.

Grundgedanke der Erfindung ist es, die schwer mahlbare Bindemittelkomponente (die aus mehreren Bestandteilen bestehen kann) separat in einem eigenen Mahlaggregat vorzumahlen, im weiteren Verlauf dann jedoch mit der oder den übrigen Bindemittel-Komponente(n), die zuvor in einer Durchlaufmühle vorgemahlen wurde(n), in demselben Mahlaggregat, und zwar im austragsseitigen Endbereich, einer gemeinsamen Endmahlung zu unterziehen, wobei die gemeinsame Endmahlung gleichzeitig der Vermischung dient.

Insoweit stellt die Erfindung eine neuartige Verknüpfung der aus dem Stand der Technik bekannten Verfahren dar. Einerseits wird auf eine bekannte Durchlaufmühle zurückgegriffen. Andererseits wird mindestens eine Komponente, nämlich die schwer mahlbare Komponente, extern vorgemahlen. Über diese Verknüpfung der bekannten Verfahren hinaus unterscheidet sich die Erfindung vom Stand der Technik wie folgt:

Die Durchlauf-Rohrmühle wird nicht nur zur Vermahlung der leicht mahlbaren Komponenten verwendet, sondern dieselbe Rohrmühle dient auch der gemeinsamen Endvermahlung mit der schwer mahlbaren Komponente. Um die unterschiedliche Mahlbarkeit der einzelnen Komponenten zu berücksichtigen, wird die schwer mahlbare Komponente dabei an einer vorwählbaren Stelle zwischen dem Mühleneintrag und dem Mühlenaustrag zugeführt. Diese Stelle - und darin liegt ein wesentliches Merkmal der Erfindung und ein entscheidender Vorteil gegenüber dem Stand der Technik - kann in Abhängigkeit von den gewünschten Kornfraktionen (spezifischen Oberflächen) der Einzelkomponenten und/oder der Gesamtmischung sowie der Brutto-Zusammensetzung des herzustellenden Bindemittels ausgewählt werden.

Daraus folgt, daß mit ein und derselben Anlage Bindemittel unterschiedlicher Zusammensetzung gemahlen und gemischt werden können. Eine separate Mischeinrichtung entfällt. Durch die Positionierung der Zugabeeinrichtung für die schwer mahlbare Komponente sowie die Einstellung der Durchlaufzeit können gleichzeitig Bindemittel unterschiedlicher Feinheit der Einzelkomponenten oder Gesamtmischung hergestellt werden.

Soweit in der EP 0 010 027 B1 vorgeschlagen wird, verschiedene Komponenten zeitlich versetzt zuzumahlen, so erfolgt dies genau umgekehrt zur erfindungsgemäßen Lehre. In diesem Stand der Technik wird nämlich die leicht mahlbare Komponente zeitlich versetzt zugemischt, um eine Übermahlung zu verhindern.

In ihrer allgemeinsten Ausführungsform betrifft die Erfindung ein Verfahren zur Herstellung eines Bindemittels, das wenigstens zwei Komponenten unterschiedlicher Mahlbarkeit aufweist, und durch folgende Schritte gekennzeichnet ist:
- die Komponenten A mit höherer Mahlbarkeit (geringerem Mahlwiderstand) wird dem Einlauf einer Durchlauf-Rohrmühle aufgegeben und auf ihrem Weg zum Mühlenaustrag gemahlen,
- an einer Stelle zwischen dem Mühleneinlauf und -austrag erfolgt die Zugabe der schwer mahlbaren Komponente C in vorgemahlener Form in die Rohrmühle,
- zwischen der Stelle der Zugabe der Komponente C und dem Mühlenaustrag werden alle Komponenten einer gemeinsamen Endmahlung in der Rohrmühle unterworfen und gemeinsam abgezogen.

Dabei können die Komponenten A und C jeweils wiederum aus einer oder mehreren Substanzen bestehen.

Im Fall des Hüttenzements steht die Komponenten A z.B. stellvertretend für Portlandzement-Klinker und Gips (Sulfatträger) und die Komponente C für Hüttensand.

Dadurch, daß die Komponente A in der Durchlaufmühle zunächst ohne den Hüttensand vermahlen wird, kann die Mahlzeit dieser Komponente gegenüber dem Stand der Technik (gemeinsame Vermahlung mit dem Hüttensand) deutlich verkürzt werden. Gleichzeitig verbleibt der Vorteil der gemeinsamen Vermahlung der Bestandteile der Komponente A und damit der homogenen Vermischung. Dies gilt im weiteren Verlauf auch für die gemeinsame Endmahlung der Komponenten A und C (nach Zugabe des extern vorgemahlenen Hüttensandes), weil alle Komponenten einer - wenngleich verkürzten - Vermahlung/Vermischung unterworfen werden.

Überraschend hat sich herausgestellt, daß ein so hergestelltes Bindmittel höhere Festigkeiten entwickelt als es bei der getrennten Mahlung mit abschließender separater Mischung der Fall ist. Die Erfinder erklären sich dieses Verhalten des Bindemittels dadurch, daß die gemeinsame Vermahlung der Komponenten eine höhere Oberflächenkontaktierung und damit Reaktionsbereitschaft verursacht. Gleichzeitig wurde für ein erfindungsgemäß hergestelltes Bindemittel ein reduzierter Wasserbedarf festgestellt.

Die kurze gemeinsame Endmahlung und Vermischung beeinflußt die Eigenschaften der Komponente A keinesfalls negativ, wie dies bei vollständiger gemeinsamer Vermahlung beobachtet wurde. Die separate Vormahlung des Hüttensandes erfordert zwar einen zweiten Verfahrensschritt, der jedoch aufgrund der Optimierung der Mahlung/Mischung und verbesserten Zementeigenschaften in Kauf genommen werden kann, zumal sich folgende weitere Vorteile ergeben:

Der Energiebedarf für die ausschließliche Mahlung des Hüttensandes (in einem geeigneten Mahlaggregat) ist sehr viel geringer als bei der gemeinsamen Vermahlung mit den übrigen Komponenten in einer Durchlaufmühle. Dies gilt insbesondere dann, wenn ein Zement besonders hoher Mahlfeinheit hergestellt werden soll, der sich im reinen Durchlaufverfahren wirtschaftlich nicht herstellen ließe. Wie dargestellt kann darüber hinaus das Kornband (die Kornzusammensetzung) des Bindemittels individuell eingestellt werden. Es lassen sich Bindemittel mit flachem Kornband erfindungsgemäß herstellen.

Von Fall zu Fall kann es vorteilhaft sein, der schwer mahlbaren Komponente bereits vor der Aufgabe in die Rohrmühle einen Teil der übrigen Komponenten zuzumischen.

Diese zugemischten Komponenten können sowohl vorgemahlen wie ungemahlen sein. Auch auf diese Weise läßt sich das Kornspektrum des Bindemittels (und dessen spezifische Oberfläche) von Fall zu Fall einstellen.

Die Durchlauf-Rohrmühle zur Durchführung des Verfahrens ist gekennzeichnet durch folgende Merkmale:
- eine Aufgabeeinrichtung für das Mahlgut (Komponente A) an einem ersten Mühlenende(Mühleneinlauf)
- eine zweite Aufgabeeinrichtung für das Mahlgut (Komponente C) zwischen der ersten Aufgabeeinrichtung und der Austragseinrichtung am zweiten Mühlenende.

Die Rohrmühle kann eine Ein- oder Mehrkammermühle sein. Ist sie als Mehrkammermühle gestaltet, so dienen die dem Mühleneinlauf benachbarte(n) Kammer(n) der Mahlung der Komponente(n) höherer Mahlbarkeit und die dem Mühlenaustrag benachbarte(n) Kammer(n) der gemeinsamen Mahlung aller Komponenten.

Im übrigen kann die Rohrmühle wie im Stand der Technik gestaltet sein, so daß auf die einschlägige Literatur verwiesen wird (z.B. Höffl "Zerkleinerungs- und Klassiermaschinen", Springer-Verlag, 1986).

## Patentansprüche

1. Verfahren zur Herstellung eines Bindemittels aus wenigstens zwei Komponenten (A, C) unterschiedlicher Mahlbarkeit, gekennzeichnet durch folgende Schritte:
1.1 die Komponente A mit höherer Mahlbarkeit (geringerem Mahlwiderstand) wird dem Einlauf einer Durchlauf-Rohrmühle aufgegeben und auf ihrem Weg zum Mühlenaustrag gemahlen,
1.2 an einer Stelle zwischen dem Mühleneinlauf und -austrag erfolgt die Zugabe der schwer mahlbaren Komponente C in vorgemahlener Form in die Rohrmühle,
1.3 zwischen der Stelle der Zugabe der Komponente C und dem Mühlenaustrag werden alle Komponenten einer gemeinsamen Endmahlung in der Rohrmühle unterworfen.

2. Verfahren nach Anspruch 1, bei dem der schwer mahlbaren Komponente C bereits vor der Aufgabe in die Durchlauf-Rohrmühle ein Teil der übrigen Komponente(n) A zugemischt wird.

3. Verfahren nach Anspruch 2 mit der Maßgabe, daß die zugemischte(n) Komponente(n) A als vorgemahlenes Material eingesetzt wird (werden).

4. Verfahren nach Anspruch 2 mit der Maßgabe, daß die zugemischte(n) Komponente(n) A als ungemahlenes Material eingesetzt werden.

5. Verfahren nach einem der Ansprüche 1 bis 4 mit der Maßgabe, daß als Komponente A ein Zementklinker und als Komponente C vorgemahlener Hüttensand eingesetzt werden.

6. Verfahren nach einem der Ansprüche 1 bis 5, bei dem als Komponente A ein Gemisch aus Zementklinker und einem Sulfatträger wie Gips oder Anhydrit eingesetzt wird.

7. Verfahren nach einem der Ansprüche 1 bis 6, bei dem die schwer mahlbare Komponente C im austragsseitigen letzten Drittel der Rohrmühle zugegeben wird.

8. Durchlauf-Rohrmühle zur Durchführung des Verfahrens nach einem der Ansprüche 1 bis 7, gekennzeichnet durch eine Aufgabeeinrichtung für das Mahlgut (Komponente A) an einem ersten Mühlenende und eine zweite Aufgabeeinrichtung für das Mahlgut (Komponente C) zwischen der ersten Aufgabeeinrichtung und der Austragseinrichtung am zweiten Mühlenende.

9. Rohrmühle nach Anspruch 8, die in mehrere Kammern unterteilt ist, wobei die dem Mühleneinlauf benachbarte(n) Kammer(n) der Mahlung der Komponente(n) A höherer Mahlbarkeit und die dem Mühlenaustrag benachbarte(n) Kammer(n) der gemeinsamen Mahlung aller Komponenten A, C dient (dienen).

## Claims

1. A process for production of a binder of at least two components (A, C) of different grindability, characterized by the following steps:
1.1 the component A with higher grindability (lower grinding resistance) is added into the inlet of a continuous tube mill and is ground on its way to the mill discharge,
1.2 the addition of the hard to grind component C in a preground form into the tube mill is effected at a location between the mill inlet and discharge,
1.3 all components are subjected to a common grinding between the location of the addition of the component C and the mill discharge.

2. The process according to claim 1, wherein a part of the other component(s) A is admixed to the hard to grind component C before the addition thereof into the continuous tube mill.

3. The process according to claim 2 with the proviso that the admixed component(s) A is (are) used as a preground material.

4. The process according to claim 2 with the proviso that the admixed component(s) A is (are) used as an unground material.

5. The process according to any of claims 1 to 4 with the proviso that a cement clinker is used as the component A and preground granulated blast furnace slag is used as the component C.

6. The process according to any of claims 1 to 5, wherein a mixture of a cement clinker and a sulphate carrier such as gypsum or anhydrite is used as the component A.

7. The process according to any of claims 1 to 6, wherein the hard to grind component C is added in the last third at the discharge end of the tube mill.

8. A continuous tube mill for implementation of the process according to any of claims 1 to 7, characterized by inlet means for the grinding stock (component A) at a first mill end and second inlet means for the grinding stock (component C) between the first inlet means and the discharge means at the second mill end.

9. The tube mill according to claim 8, which is divided into several chambers, the chamber(s) adjacent to the mill inlet serve(s) the grinding of the component(s) of higher grindability and the chamber(s) adjacent to the mill discharge serves the common grinding of all components A, C.

## Revendications

1. Procédé de fabrication d'un liant composé d'au moins deux éléments (A, C) de broyabilité différente, caractérisé par les étapes suivantes:
1.1 l'élément A à broyabilité élevée (faible résistance au broyage) est introduit à l'entrée d'un tube broyeur en continu et broyé jusqu'à la sortie du tube,
1.2 on introduit l'élément C difficilement broyable sous forme prébroyée en un point situé entre l'entrée et la sortie du tube broyeur,
1.3 tous les éléments sont soumis à un broyage final commun entre le point d'introduction de l'élément C et la sortie du tube broyeur.

2. Procédé selon la revendication 1, dans lequel une partie de l'autre ou des autres éléments A est mélangée à l'élément C difficilement broyable avant l'introduction dans le tube broyeur en continu.

3. Procédé selon la revendication 2 caractérisé en ce que le ou les éléments A mélangés à C sont utilisés sous forme prébroyée.

4. Procédé selon la revendication 2 caractérisé en ce que le ou les éléments A mélangés à C sont utilisés sous forme non broyée.

5. Procédé selon l'une des revendications 1 à 4 caractérisé en ce qu'on emploie un clinker comme élément A et un sable de laitier prébroyé comme élément C.

6. Procédé selon l'une des revendications 1 à 5, dans lequel on utilise un mélange de clinker et d'un porteur de sulfate tel que le gypse ou l'anhydrite comme élément A.

7. Procédé selon l'une des revendications 1 à 6 dans lequel l'élément C difficilement broyable est introduit dans le dernier tiers du côté de la sortie du tube broyeur.

8. Tube broyeur en continu pour la réalisation du procédé selon l'une des revendications 1 à 7, caractérisé par un dispositif d'introduction de la matière à broyer (élément A) situé à une première extrémité du tube et un second dispositif d'introduction de la matière à broyer (élément C) situé sur la deuxième extrémité du tube entre le premier dispositif d'introduction et le dispositif de déversement.

9. Tube broyeur selon la revendication 8, lequel est divisé en plusieurs cavités, la ou les cavités proches de l'entrée du tube servant au broyage de ou des éléments A à broyabilité élevée et la ou les cavités proches de la sortie du tube servant au broyage commun de tous les éléments A, C.
